# EUROPEAN PATENT APPLICATION

(11) **EP 1 142 965 A1**
(43) Date of publication of application: **10.10.2001**
(21) Application number: 01104160.5
(22) Date of filing: 21.02.2001
(51) Int. Cl.: C09D 11/00

(54) **Ultraviolet radiation curable ink**

(30) Priority: 17.03.2000 JP 2000076549
(71) Applicant: RISO KAGAKU CORPORATION, Tokyo (JP)
(72) Inventor: Hayashi, Akiko, c/o Riso Kagaku Corporation, Inashiki-gun, Ibaraki-ken, 300-0333 (JP); Endo, Toshihiro, c/o Riso Kagaku Corporation, Inashiki-gun, Ibaraki-ken, 300-0333 (JP); Yamamoto, Yasuo, c/o Riso Kagaku Corporation, Inashiki-gun, Ibaraki-ken, 300-0333 (JP)
(74) Representative: Wilhelms, Rolf E., Dr.

(57) **Abstract**

An ultraviolet radiation curable ink is provided, which does not make the printed image hazy or blurred, and does not drip or leak from the ink container or printing drum, hence being excellent in both printability and operability. The ultraviolet radiation curable ink comprises an ultraviolet radiation curable resin monomer or oligomer as a varnish, and the ink has a viscosity of 2.0 to 13.0 Pa·s measured at a shear rate of 100 (l/s) at 23°C, and has an yield value of 25 Pa or higher at 23°C. The ink can contain a viscosity regulator, for example, as a powder. It is preferable that the content of powdery ingredients in the ink is 30 wt% or less based on the total weight of the ink.

## Description

This invention relates to an ultraviolet radiation curable ink particularly useful for stencil printing, which does not make printed images hazy or blurred, and does not drip or leak from ink containers or printing machines, hence being excellent in both printability and operability.

Ultraviolet radiation curable inks using an ultraviolet radiation curable resin as a varnish are disclosed in Japanese Patent Nos. 2660000 and 2612318. When an ultraviolet radiation curable ink is used for stencil printing, the ink can be immediately cured only by irradiating a printed sheet with ultraviolet radiation, thereby providing such merits that dryability is good and that such problems as offset can be avoided.

However, the ultraviolet radiation curable inks have a problem that they are vulnerable to change in viscosity due to influence of service environment since they are mainly composed of an ultraviolet radiation curable resin. That is, if the ink viscosity is too low, the ink becomes easy to permeate stencils, and thus is transferred onto the printing medium so much as to make the printed image blotted or blurred. On the contrary, if the ink viscosity is too high, the ink becomes difficult to permeate stencils, and is transferred onto the printing medium so less as to make the image hazy.

In addition, if the ink viscosity is too low, other problems happen. For example, when the ink container is tilted, the ink tends to drip. When the ink is left in a printing drum, it flows downward in the drum and collects on the bottom portion thereof, affecting quality of images that are subsequently printed, and the ink often leaks out of the drum to stain the printing machine. On the contrary, if the ink viscosity is too high, the ink existing near the stencil becomes low in flowability, and when printing is resumed after the stencil has been allowed to stand for a certain time, it happens that many sheets of paper must be idly printed till the intended image is recovered and that the ink is not sufficiently transferred onto the printing medium.

The object of this invention is to provide an ultraviolet radiation curable ink that does not make the printed image hazy or blurred, and does not drip or leak from the ink container or printing drum, hence being excellent in both printability and operability.

As a result of intensive researches made by the present inventors to achieve the above object, the present inventors have found an ultraviolet radiation curable ink which satisfies both printability and operability and is particularly useful for stencil printing. That is, the present invention provides an ultraviolet radiation curable ink, which comprises an ultraviolet radiation curable resin monomer or oligomer as a varnish, said ink having a viscosity of 2.0 to 13.0 Pa·s measured at a shear rate of 100 (l/s) at 23°C , and having an yield value of 25 Pa or higher at 23°C. Thus, this invention has been completed.

If the viscosity of the ink at a shear rate of 100 (l/s) measured at 23°C is lower than 2.0 Pa·s, the ink viscosity is so low as to make the density of the print too high, making the printed image blurred, and clear prints cannot be obtained. On the other hand, if the viscosity of the ink at a shear rate of 100 (l/s) measured at 23°C is higher than 13.0 Pa·s, the ink viscosity is too high to obtain a sufficient print density, making the printed image hazy, and clear prints cannot be obtained. It is more preferable that the viscosity of the ink at a shear rate of 100 (l/s) measured at 23°C is in a range of 2 to 8 Pa·s. If the viscosity is in this range, dependence of the respective properties of the ink on temperature changes is improved, and an excellent ultraviolet radiation curable ink that can be used in a wider temperature range can be obtained.

Furthermore, in this invention, attention is paid to the yield value of ink, and the ink is prepared to achieve a yield value of 25 Pa or higher at 23°C. As a result, the ink which is in the above viscosity range can be prevented from dripping from ink containers or printing drums. Thus, this invention provides an ultraviolet radiation curable ink good in both printability and operability.

The ultraviolet radiation curable ink of this invention is mainly composed of an ultraviolet radiation curable resin oligomer or monomer, a photo polymerization initiator, a colorant such as a pigment, a polymerization inhibitor, etc.

The ink viscosity and yield value of this invention can be achieved by adequately selecting the proportion of the above ink ingredients. For example, if the amount of the ultraviolet radiation curable resin oligomer or monomer is adjusted, an ink with a predetermined viscosity and yield value can be obtained. Furthermore, in addition to the above ingredients, a viscosity regulator can also be added to achieve a predetermined ink viscosity and yield value.

Examples of the ultraviolet radiation curable resin include oligomers and monomers of resins such as urethane resins, epoxy resins, polyester resins and polyol resins respectively modified by (meth)acrylic acid.

Examples of the oligomer include epoxy acrylates, epoxy oil acrylates, urethane acrylates, unsaturated polyesters, polyester acrylates, polyether acrylates, vinyl acrylates, etc. Examples of the monomer include monofunctional acrylates such as dicyclopentenylethyl acrylate, isobornyl acrylate and phenol ethylene oxide modified acrylate, polyfunctional acrylates such as tripropylene glycol diacrylate, 1,6-hexanediol diacrylate, bisphenol A diglycidyl ether diacrylate, tetraethylene glycol diacrylate, trimethylolpropane triacrylate, pentaerythritol triacrylate, pentaerythritol tetraacrylate, dipentaerythritol hexaacrylate, etc.

As the photo polymerization initiator, commercially available products can be used. It can be, for example, one or more as a mixture selected from Irgacure 651, Irgacure 184, Darocure 1173, Irgacure 907, Irgacure 369 (respectively trade name, produced by Ciba Geigy), Kayacure DETX, Kayacure ITX (respectively trade name, produced by Nippon Kayaku Co., Ltd.), Rucilin TPO (trade name, produced by BASF), benzophenone, acetophenone, 4,4'-bisdiethylaminobenzophenone, benzyl, benzoin, benzoin ethyl ether, etc. Furthermore, as a sensitizer, an aliphatic amine or aromatic amine such as n-butylamine, triethylamine or p-(dimethylamino)ethylbenzoate can be used together. The photo polymerization initiator is generally added in an amount of 1 to 20 wt% based on the total weight of the ultraviolet radiation curable ink.

Examples of the colorant include inorganic pigments such as carbon black, titanium dioxide and Prussian blue, organic pigments such as phthalocyanine pigments, insoluble azo pigments, soluble azo pigments and quinacridone pigments, and also various dyes such as disperse dyes. The colorant content can be generally 1 to 30 wt% based on the total weight of the ink.

Examples of the viscosity regulator include powders such as organic bentonite, organic hectorite, waxes, calcium carbonate, silica, starches, metallic soaps, quartz, glass, polytetrafluoroethylene (Teflon (trade name)), etc. As required, for example, a commercially available gelling agent can also be used together.

Examples of the polymerization inhibitor include hydroquinone, nitroso compounds, etc. The inhibitor is effective for preventing the gelation during storage.

The ultraviolet radiation curable ink of this invention can also contain, as required, various known additives such as a photo polymerization initiator aid, pigment dispersing agent, antioxidant, antiseptic, mildewproofing agent, silicone oil, surfactant, surface lubricant, defoaming agent and photostabilizer.

The ultraviolet radiation curable ink of this invention can be prepared, for example, by stirring and mixing an ultraviolet radiation curable resin oligomer or monomer and other predetermined ingredients, and then kneading them using a kneading machine such as a triple-roll mill.

The ink viscosity and yield value of this invention can be changed if the amounts of the powdery ingredients contained in the ink are changed. In this invention, the powdery ingredients include not only said powdery viscosity regulator but also a pigment. If the amount of the powdery ingredients contained in the ink is too large, the abrasion resistance of the ink after printing declines. So, it should be avoided to let the ink contain the powdery ingredients more than necessary. To prepare an ink with the predetermined viscosity of this invention, it is desirable that the content of the powdery ingredients is kept at 30 wt% or less based on the total weight of the ink.

The ultraviolet radiation curable ink of this invention can be printed onto a printing medium using a known stencil printing machine, and cured by irradiation with visible light or ultraviolet light using a proper light source. Examples of the light source include a xenon lamp, high pressure mercury lamp, metal halide lamp, etc.

### Examples

This invention is described below in more detail with reference to examples. In the following examples, "parts" means "parts by weight".

### Examples 1 through 7 and Comparative Examples 1 through 5

All the ingredients shown in Table 1 or 2 were mixed, and the powdery ingredients such as a pigment and a viscosity regulator were dispersed therein using a triple-roll mill, to obtain a stencil printing ink. The properties of the obtained ink were evaluated according to the following test methods. The evaluation results are shown in Table 3 or 4.

### Test methods

### (1) Viscosity measurement

A rheometer produced by HAAKE (RheoStress RS75, 20 diameter, cone angle 1°) was used. The shear rate was continuously changed from 0 to 1000 l/s at 23°C in one minute while viscosity was measured, to obtain a viscosity curve. Then, the viscosity at a shear rate of 100 l/s was obtained.

### (2) Yield value

A rheometer produced by HAAKE (RheoStress RS75, 20 diameter, cone angle 1°) was used. The shear rate was continuously changed from 0 to 100 l/s at 23°C in one minutes while shear stress was measured, to obtain a shear stress curve. Then, a value of shear stress at a shear rate of 0.1 l/s was adopted as the yield value.

### (3) Dripping from ink container

A plastic ink bottle for a stencil printing ink (produced by Riso Kagaku Corporation) commercially available for a digital stencil printing machine RISOGRAPH (registered trademark) SR7200 (produced by Riso Kagaku Corporation) was filled with an ink. The cover of the ink supply port was opened, and the ink supply port was turned downward, to observe whether the ink flowed out of the bottle 10 seconds later. A case where the ink did not flow out was expressed by ○, and a case where the ink flowed out, by ×.

### (4) Blurring or haze of printed images

Two hundred sheets of paper were continuously printed using a digital stencil printing machine RISOGRAPH (registered trademark) SR7200 (produced by Riso Kagaku Corporation) under the following printing conditions, and the ink was cured by xenon flash irradiation within several seconds according to the following curing conditions.
- Printing conditions:
   Printing temperature ··· 23°C
   Printing speed ··· 120 sheets/min
   Printing paper ··· Neutral paper (sold under the trade name "RISO YOUSHI USUKUTI")
- Ink curing conditions
   Xenon flash ··· Output 0.85 J/cm²
   One flash
   Produced by Ushio Inc.

Printed images were observed with naked eyes. A case where blurring or haze of the images was noticeable is expressed by ×, and a case where little blurring or haze of the images was observed is expressed by ○.

### (5) Image recovery after prolonged halt of machine

The printing machine was allowed to stand for 24 hours after completion of printing in the above item (4), and 20 sheets of paper were printed continuously again, to observe the printed image with naked eyes. A case where the intended image was recovered during the printing of 20 sheets is expressed by ○, and a case where the intended image was not recovered, by ×.

### (6) Ink deposition on printing machine

A case where the ink was deposited on the printing machine during the printing of the above item (4) is expressed by ×, and a case where the ink was not deposited, by ○.

### (7) Abrasion resistance

On the printed surface of the print obtained by printing and curing in the above item (4), a clock meter was reciprocated 5 times. A case where the image was contaminated by rubbing is expressed by ×, and a case where the image was not contaminated, by ○.

**Table 1**

| | Example 1 | Example 2 | Example 3 | Example 4 | Example 5 | Example 6 | Example 7 |
|---|---|---|---|---|---|---|---|
| Oligomer | 0.0 | 9.0 | 25.0 | 30.0 | 24.0 | 14.0 | 36.0 |
| Monomer 1 | 15.2 | 38.2 | 30.7 | 29.2 | 32.2 | 28.7 | 26.2 |
| Monomer 2 | 73.2 | 38.2 | 30.7 | 29.2 | 32.2 | 28.7 | 26.2 |
| Photo polymerization initiator | 3.5 | 3.5 | 3.5 | 3.5 | 3.5 | 3.5 | 3.5 |
| Pigment | 4.0 | 5.0 | 4.0 | 4.0 | 4.0 | 7.0 | 4.0 |
| Dispersing agent | 1.0 | 1.0 | 1.0 | 1.0 | 1.0 | 1.0 | 1.0 |
| Polymerization inhibitor | 0.1 | 0.1 | 0.1 | 0.1 | 0.1 | 0.1 | 0.1 |
| Viscosity regulator | 3.0 | 5.0 | 5.0 | 7.0 | 3.0 | 20.0 | 2.0 |

**Table 2**

| | Comparative Example 1 | Comparative Example 2 | Comparative Example 3 | Comparative Example 4 | Comparative Example 5 |
|---|---|---|---|---|---|
| oligomer | 41.4 | 10.0 | 3.0 | 40.0 | 0.0 |
| Monomer 1 | 25.0 | 39.2 | 29.7 | 24.2 | 49.4 |
| Monomer 2 | 25.0 | 39.2 | 29.7 | 24.2 | 38.0 |
| Photo polymerization initiator | 3.5 | 3.5 | 3.0 | 3.5 | 3.5 |
| Pigment | 4.0 | 4.0 | 3.5 | 4.0 | 4.0 |
| Dispersing agent | 1.0 | 1.0 | 1.0 | 1.0 | 1.0 |
| Polymerization inhibitor | 0.1 | 0.1 | 0.1 | 0.1 | 0.1 |
| viscosity regulator | 0.0 | 3.0 | 30.0 | 2.0 | 4.0 |

The terms in Tables 1 and 2 mean the following compounds. Oligomer: Epoxy acrylate oligomer
Monomer 1: Dipentaerythritol hexaacrylate (DPHA)
Monomer 2: Phenol ethylene oxide modified acrylate
   Photo polymerization initiator: Irgacure 369 (trade name, produced by Ciba Geigy)
Pigment: Furnace carbon
Dispersing agent: SOLSPERSE S24000GR (trade name, produced by Zeneka K.K.)
Polymerization inhibitor: Hydroquinone
Viscosity regulator: BENTON38 (trade name, produced by RHEOX)

**Table 3**

| | Example 1 | Example 2 | Example 3 | Example 4 | Example 5 | Example 6 | Example 7 |
|---|---|---|---|---|---|---|---|
| Ink viscosity | 6.1 | 2.0 | 7.3 | 13.0 | 4.6 | 10.2 | 12.5 |
| Yield value (23°C) | 35 | 50 | 200 | 800 | 50 | 1000 | 25 |
| Dripping from ink container | ○ | ○ | ○ | ○ | ○ | ○ | ○ |
| Blurring or haze of printed images | ○ | ○ | ○ | ○ | ○ | ○ | ○ |
| Image recovery after prolonged halt of machine | ○ | ○ | ○ | ○ | ○ | ○ | ○ |
| Ink deposition on printing machine | ○ | ○ | ○ | ○ | ○ | ○ | ○ |
| Abrasion resistance | ○ | ○ | ○ | ○ | ○ | ○ | ○ |

**Table 4**

| | Comparative Example 1 | Comparative Example 2 | Comparative Example 3 | Comparative Example 4 | Comparative Example 5 |
|---|---|---|---|---|---|
| Ink viscosity | 7.4 | 3.0 | - | 13.5 | 1.4 |
| Yield value (23°C) | 5 | 20 | 1200 | 25 | 25 |
| Dripping from ink container | × | × | ○ | ○ | ○ |
| Blurring or haze of printed images | ○ | ○ | ○ | × | × |
| Image recovery after prolonged halt of machine | × | ○ | × | ○ | ○ |
| Ink deposition on printing machine | × | × | ○ | ○ | ○ |
| Abrasion resistance | ○ | ○ | × | ○ | ○ |

From the comparison between the examples and Comparative Example 5, it was found that when the ink viscosity was lower than 1.4 Pa·s, the ink is too low in viscosity, and thus the ink is transferred onto paper more than necessary, causing blurring of printed images. So, it was found necessary that the ink viscosity should be 2.0 Pa·s or more for preventing the image from being blurred.

From the comparison between the examples and Comparative Example 4, it was found that when the ink viscosity was higher than 13.5 Pa·s, the ink is too high in viscosity, and the ink is not readily permeate the stencil and is not transferred to paper in an amount sufficient to form the image, thereby causing the printed image to be hazy. So, it was found that the ink viscosity should be 13.0 Pa·s or lower to prevent the printed image from becoming hazy.

From the comparison between the examples and Comparative Examples 1 and 2, it was found that when the yield value was lower than 25 Pa, the ink dripped from the container or from the printing drum, causing the ink to be deposited on the printing machine.

From the comparison between the examples and Comparative Examples 1 and 2, it was found that there is a case where the yield value is lower than 25 Pa even if the ink viscosity is in a range of 2.0 to 13.0 Pa·s, and that even in the case where the printability is good, the ink may drip from the container or from the printing drum, causing the ink to be deposited on the printing machine or showing poor operability.

From the comparison between the examples and Comparative Example 3, it was found that if the content of the powdery ingredients is more than 30 wt%, the ink viscosity becomes poor, to delay the image recovery after prolonged halt of the machine, and also to lower the abrasion resistance.

As described above in detail, according to this invention, since the ink viscosity at a shear rate of 100 (l/s) measured at 23°C is 2.0 to 13.0 Pa·s, the print obtained is neither blurred nor hazy. In addition, since the yield value of the ink at 23°C is 25 Pa or higher, the ink holds a certain hardness even in a standstill state, and it does not happen that the ink drips from the container and the printing drum. Furthermore, the image recovery after prolonged halt of the machine is also good.

## Claims

1. An ultraviolet radiation curable ink, which comprises an ultraviolet radiation curable resin monomer or oligomer as a varnish, said ink having a viscosity of 2.0 to 13.0 Pa·s measured at a shear rate of 100 (l/s) at 23°C , and having an yield value of 25 Pa or higher at 23°C.

2. An ultraviolet radiation curable ink according to claim 1, wherein said ink has a viscosity of 2 to 8 Pa·s measured at a shear rate of 100 (l/s) at 23°C.

3. An ultraviolet radiation curable ink according to claim 1, which further comprises a viscosity regulator.

4. An ultraviolet radiation curable ink according to claim 3, in which said viscosity regulator is a powder.

5. An ultraviolet radiation curable ink according to claim 1, which comprises powdery ingredients in an amount of 30 wt% or less based on the total weight of the ink.

6. An ultraviolet radiation curable ink according to claim 5, in which said powdery ingredients are composed of a pigment and a viscosity regulator.

7. An ultraviolet radiation curable ink according to claim 4, in which said viscosity regulator is a powder selected from a group consisting of organic bentonite, organic hectorite, waxes, calcium carbonate, silica, starches, metallic soaps, quartz, glass and polytetrafluoroethylene.
